# DEMANDE DE BREVET EUROPEEN

(11) **EP 1 205 672 A1**
(43) Date de publication de la demande: **15.05.2002**
(21) Numéro de dépôt: 01402634.8
(22) Date de dépôt: 11.01.2001
(51) Int. Cl.: F16B 9/02, F16F 1/373

(54) **Support de retenue souple d'un objet sur une cloison**

(30) Priorité: 10.11.2000 FR 0014444
(71) Demandeur: Delphi Technologies, Inc., Troy, MI 48007 (US)
(72) Inventeur: Jawdoszyn, Claude, 94703 Maisons Alfort (FR)
(74) Mandataire: Abello, Michel

(57) **Abrégé**

Support de retenue (106) destiné à retenir de manière démontable un objet (101) sur une cloison (104), comportant un manchon apte à être longitudinalement engagé dans un trou (105) formé dans ladite cloison et à recevoir dans son espace intérieur (114) une partie mâle dudit objet, ledit manchon comportant une partie de butée (102,116) destinée à venir en contact contre ladite cloison, ledit manchon présentant, entre une partie d'entrée et une partie de fond, une partie d'étranglement (113) formée par un bourrelet périphérique en saillie à l'intérieur du manchon ; ledit bourrelet périphérique étant apte à déformer la paroi du manchon au niveau de la partie d'étranglement de manière à générer un renflement périphérique (117) qui fait saillie vers l'extérieur pour entrer en contact avec l'autre face (121) de ladite cloison et enserrer ladite cloison entre lui-même et la partie de butée.

## Description

La présente invention concerne un support de retenue destiné à retenir un objet, notamment un organe électrique d'un véhicule automobile, comme un émetteur ou un récepteur à ult rason, sur une cloison, de préférence mince, notamment une cloison de la carrosserie ou du châssis du véhicule.

Lorsqu'on monte un émetteur ou un récepteur à ultrason faisant partie du système d'alarme d'un véhicule automobile sur une cloison de l'habitacle dudit véhicule, il est nécessaire d'empêcher d'éventuelles transmissions de vibrations depuis ou vers ledit émetteur ou récepteur par l'intermédiaire de la cloison, surtout si un émetteur et un récepteur sont situés proches l'un de l'autre sur la cloison. Pour cela, il est connu d'isoler mécaniquement ledit émetteur (ou récepteur) en insérant entre lui et la cloison un support souple apte à absorber les vibrations. La matière souple utilisée est généralement un élastomère, c'est-à-dire un polymère élastique.

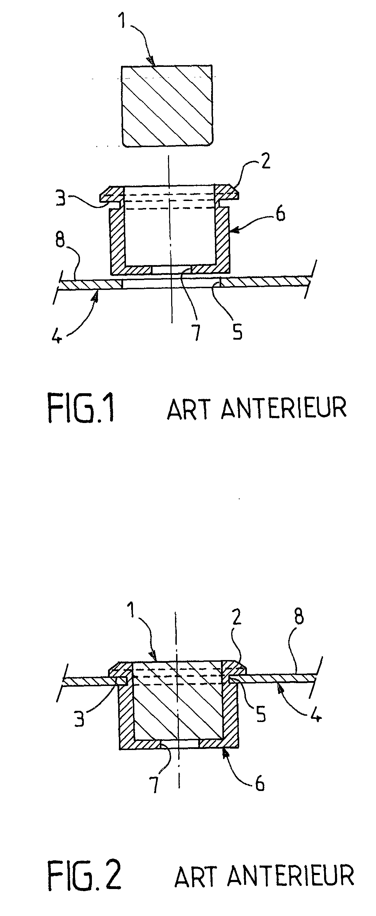

On connaît notamment un tel support comportant un manchon en élastomère, qui est représenté aux figures 1 et 2. Sur ces figures, la cloison est désignée par le chiffre 4, l'organe électrique (par exemple émetteur ou récepteur) à monter est désigné par le chiffre 1 et le support souple par le chiffre 6. L'organe 1 est de forme globalement cylindrique. La cloison 4 est percée d'un trou débouchant 5 de diamètre supérieur à celui de l'organe 1. La cloison 4 est représentée plane mais peut être de géométrie plus compliquée, arrondie et/ou présentant des angles. En effet, la face 8 de la cloison 4 par laquelle l'organe 1 est monté peut être visible à l'intérieur du véhicule. La cloison 4 est donc conçue et réalisée selon certaines contraintes esthétiques, ergonomiques ou d'encombrement qui peuvent justifier une telle géométrie compliquée.

Le support souple 6 connu présente globalement la forme d'un étui ou d'un manchon cylindrique fermé à une extrémité par une paroi de fond. Le support 6 présente un logement cylindrique de section uniforme de dimensions intérieures, diamètre et profondeur, adaptées aux dimensions correspondantes de l'organe 1, pour pouvoir contenir ce dernier.

Le diamètre extérieur du support 6 est supérieur à celui du trou 5, de sorte que le manchon doit être comprimé de manière élastique pour être engagé à travers le trou 5. A son extrémité opposée à sa paroi de fond, le support 6 présente une nervure annulaire 2 transversalement en saillie par rapport au manchon et destinée à venir en butée contre la face 8 de la cloison 4 lorsque le support 6 est engagé dans le trou 5. Le support 6 présente une gorge périphérique 3 ménagée dans l'épaisseur de la paroi du support 6 sur son extérieur et adjacente à la nervure annulaire 2. Le diamètre et la large ur du fond de la gorge 3 sont adaptés respectivement au diamètre du trou 5 et à l'épaisseur de la cloison 4, de sorte que lorsque le support 6 est monté sur la cloison 4, la paroi du trou 5 est engagée sur toute sa périphérie dans la gorge 3, et la cloison 4 est enserrée par les deux bords de la gorge 3. Le support 6 est ainsi retenu dans le trou 5.

Pour monter l'organe 1 dans la cloison 4 au moyen de ce support connu, on commence par engager le support 6 par son extrémité de fond dans le trou 5, puis on insère l'organe 1 dans le logement du support 6. De préférence, le diamètre intérieur du support 6 est légèrement inférieur à celui de l'organe 1 pour serrer de manière élastique l'organe 1 et ainsi le retenir. En variante, l'organe 1 peut être collé dans le logement du support 6. Un trou 7 de la paroi de fond permet ultérieurement le passage de fils électriques pour relier l'organe 1 à un circuit d'alimentation.

Des inconvénient de ce support connu sont dus notamment au fait que son montage dans le trou de la cloison, qui est fait par des automates d'une chaîne de montage, nécessite plusieurs mouvements complexes qui augmentent la durée et le coût de l'opération, ainsi que le coût et l'usure desdits automates. De plus, il est difficile de vérifier si la gorge 3 enserre correctement la cloison sur toute sa périphérie, notamment lorsque sa géométrie est complexe. La fabrication du support 6, qui est généralement réalisée par moulage d'élastomères, est aussi coûteuse à mettre en oeuvre. En effet, la présence de la gorge 3 oblige à utiliser dans l'outillage de fabrication des tiroirs qui accroissent le prix des machines et dont les mouvements compliquent et ralentissent l'opération de démoulage de la pièce fabriquée.

On connaît aussi par US 2 813 568 A une valve pour pneu munie d'un collier métallique de rivetage pour sa fixation sur une jante. Toutefois, ce dispositif de fixation est irréversible.

On connaît par US 3 272 542 A un manchon flexible destiné à assembler une valve sur un tuyau. Toutefois, ce manchon est conçu de manière à ne pas pouvoir être démonté sans déchirement après insertion de la valve.

Le document US 5 945 606 A décrit un élément élastique creux conforme au préambule de la revendication 1, qui est destiné à recevoir une partie saillante d'un capteur pour fixer ce dernier dans un trou d'un élément de fixation. Dans ce dispositif, la fonction de retenue de l'élément élastique par rapport à l'élément de fixation est assurée par un rebord préformée en saillie sur la surface extérieure de l'élément élastique au niveau de son extrémité inférieure. Un tel rebord présente des inconvénients en ce que lors de la fabrication, réalisée généralement par moulage, il oblige à utiliser dans l'outillage de fabrication des tiroirs qui accroissent le prix des machine s et dont les mouvements compliquent et ralentissent l'opération de démoulage de la pièce fabriquée.

Le but de l'invention est de fournir un support de retenue pour retenir de manière démontable un organe électrique ou autre sur une cloison et qui ne comporte pas les inconvénients précités.

Pour cela, l'invention fournit un support de retenue destiné à retenir de manière démontable un objet sur une cloison, ledit support comportant un manchon apte à être longitudinalement engagé à travers un trou formé dans ladite cloison, ledit manchon ayant une paroi déformable de manière élastique définissant un espace intérieur, ledit manchon étant apte à recevoir dans son espace intérieur une partie mâle dudit objet à retenir, ledit manchon comportant une partie de butée présentant une dimension transversale extérieure supérieure à la dimension transversale extérieure correspondante du reste dudit manchon, ladite partie de butée étant destinée à venir en contact contre une face de ladite cloison autour dudit trou lorsque ledit manchon est engagé dans ledit trou, ledit manchon présentant, entre une partie d'entrée et une partie de fond, une partie d'étranglement formée par un bourrelet périphérique en saillie radiale sur l'intérieur de la paroi du manchon et dans laquelle une dimension transversale dudit espace intérieur est destinée à être inférieure à une dimension transversale correspondante de ladite partie mâle de l'objet, ladite partie d'étranglement étant apte à serrer transversalement de manière élastique la partie mâle dudit objet engagée dans ladite partie d'étranglement pour la retenir dans ledit espace intérieur ; caractérisé par le fait que la paroi dudit manchon au niveau de la partie d'étranglement est apte à être déformée de manière élastique par la partie mâle dudit objet dans une position de retenue dans laquelle ladite paroi du manchon est repoussée transversalement vers l'extérieur par la partie mâle dudit objet engagée dans ladite partie d'étranglement, ledit bourrelet périphérique étant apte, après l'engagement de la partie mâle de l'objet dans la partie d'étranglement, à déformer la paroi du manchon au niveau de la partie d'étranglement de manière à générer un renflement périphérique qui fait saillie vers l'extérieur pour entrer en contact avec l'autre face de ladite cloison et enserrer ladite cloison entre lui-même et la partie de butée, afin de retenir longitudinalement ledit support dans ledit trou .

De préférence, ledit support étant destiné à être engagé dans un trou débouchant de ladite cloison, sa longueur est supérieure à l'épaisseur de ladite cloison, la distance longitudinale entre la partie de butée et la partie d'étranglement dudit manchon étant sensiblement égale à ladite épaisseur, ladite partie de butée et ladite partie d'étranglement du manchon étant destinées à enserrer ladite cloison lorsque ladite paroi est en position de retenue.

Avantageusement, ladite partie de butée est prévue sensiblement à une extrémité longitudinale dudit manchon.

De préférence, ladite partie de butée comporte une nervure annulaire formée en saillie sur la périphérie extérieure de la paroi dudit manchon.

Dans un autre variante de l'invention, ladite partie de butée est constituée par la paroi d'une deuxième partie d'étranglement dudit manchon en saillie vers l'intérieur du logement et apte à être déformée pour faire saillie vers l'extérieur en position de retenue lors de l'engagement dudit objet.

Avantageusement, la partie de fond du manchon s'étend jusqu'à une paroi de fond fermant ledit espace intérieur à une extrémité.

De préférence, ledit support étant destiné à retenir un organe électrique d'un véhicule automobile sur une cloison dudit véhicule, ladite paroi de fond est percée d'un orifice pour permettre le passage de fils électriques reliés audit objet.

Avantageusement, ledit manchon est sensiblement cylindrique, de préférence de section circulaire ou polygonale.

De préférence, ledit support est réalisé d'un seul tenant en matière élastique, de préférence en polymère.

L'invention fournit également un ensemble formé du support de retenue précité et d'un objet destiné à être retenu à l'aide dudit support dans un trou formé dans une cloison, l'espace intérieur du support étant apte à contenir entièrement ledit objet lorsque celui -ci est engagé dans ledit espace intérieur jus qu'à venir en contact contre la paroi de fond, ledit objet ayant une dimension transversale supérieure à une dimension transversale correspondante de l'espace intérieur du manchon dans la partie d'étranglement, de sorte que l'objet engagé dans ledit espace intérieur jusqu'à la paroi de fond dilate la paroi du manchon au niveau de la partie d'étranglement de manière à générer ledit renflement périphérique.

L'invention sera mieux comprise, et d'autres buts, détails, caractéristiques et avantages de celle -ci apparaîtront plus clairement au cours de la description suivante d'un mode de réalisation particulier de l'invention, donné uniquement à titre illustratif et non limitatif, en référence au dessin annexé. Sur ce dessin :
- la figure 1 est une vue éclatée en coupe diamétrale du capteur, du trou de la cloison dans lequel il doit être monté, et d'un étui souple de montage selon une technique antérieure ;
- la figure 2 est une vue analogue à la figure 1 dans laquelle le capteur et l'étui souple sont montés dans le tr ou de la cloison ;
- la figure 3 est une vue éclatée en coupe diamétrale du capteur, du trou de la cloison dans lequel il doit être monté et d'un support de retenue selon l'invention ;
- la figure 4 est une vue analogue à la figure 3 dans laquelle le support de retenue est engagé dans le trou de la cloison et le capteur est en cours de montage dans le support de retenue ;
- la figure 5 est une vue analogue à la figure 3 dans laquelle le capteur et le support de retenue sont montés dans le trou de la cloison.

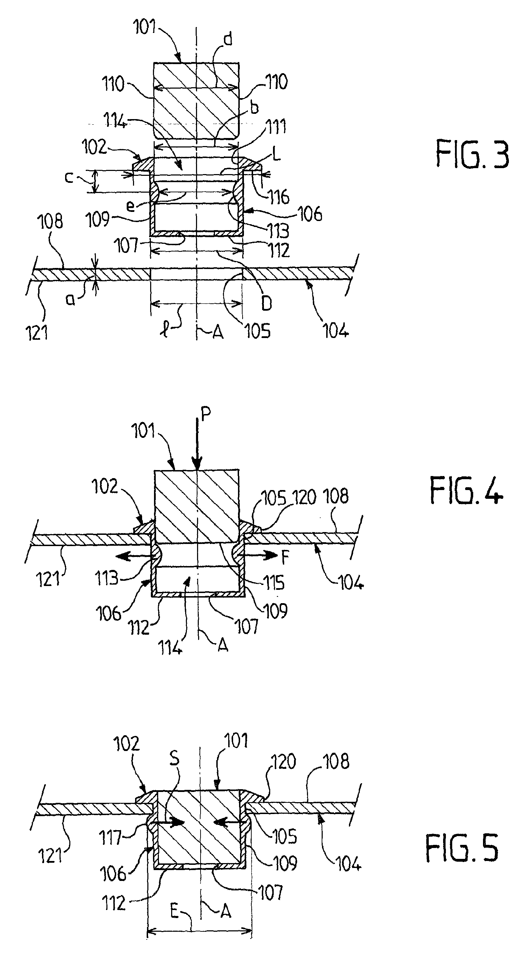

Le support va maintenant être décrit en référence aux figures 3 à 5. Sur ces figures, les éléments analogues ou identiques à ceux du support selon l'art antérieur décrit ci-dessus sont augmentés de 100. Comme précédemment, la cloison 104 représentée plane peut avoir une géométrie plus complexe. Le support 106 présente globalement une forme de manchon cylindrique de section circulaire fermé à une extrémité par une paroi de fond 112, et présentant à son extrémité opposée une nervure annulaire périphérique 102 de diamètre extérieur L sensiblement supérieur au diamètre extérieur D du reste du manchon. La nervure annulaire 102 radialement en saillie vers l'extérieur du manchon est destinée à venir en butée contre la face 108 de la cloison 104 à la périphérie du trou circulaire débouchant 105 lorsque le support 106 est engagé dans celui -ci. La nervure annulaire 102 est d'un seul tenant avec la paroi latérale 109 du manchon et présente une forme sensiblement tronconique dont la grande base du tronc de cône est tournée vers le fond 112 précité. Ainsi la surface cylindrique 120 de la nervure annulaire 102, pouvant être mise en prise avec un objet le long de la face 108 de la cloison 104, est limitée, afin de limiter le risque d'un démontage accidentel du support 106 lorsque celui-ci est engagé dans le trou 105. La nervure annulaire 102 présente une face de butée 116 sensiblement perpendiculaire à l'axe du manchon à la périphérie extérieure de celui -ci et orientée dans la direction de son fond 112.

Le diamètre extérieur D de la paroi 109 support 106 est de préférence sensiblement égal au diamètre ℓ du trou 105, de sorte que le support 106 peut être inséré par un simple mouvement de translation à travers le trou 105, jusqu'à sa position de butée, définie par la mise en contact de la face de butée 116 de la nervure annulaire 102 contre la face 108 de la cloison 104. Le diamètre extérieur D peut être légèrement supérieur au diamètre ℓ du trou 105 pour être retenu par un contact frottant contre les bords du trou 105 avant le montage de l'organe 101, particulièrement si la face 108 est tournée vers le ba s.

Comme précédemment, la paroi latérale 109 et la paroi de fond 112 définissent un logement ou espace intérieur 114 sensiblement cylindrique du support 106 de dimensions intérieures, diamètre et longueur, adaptées aux dimensions correspondantes de l'organe 101, qui est aussi cylindrique, afin de pouvoir recevoir celui -ci. Bien sûr, la forme du logement du support 106 doit être adaptée à la forme de l'organe 101 à retenir, et peut être de section autre que circulaire, par exemple polygonale, elliptique, ou autre.

Le diamètre intérieur b de la paroi 109 du logement 114 est, hormis au niveau d'un étranglement 113, de préférence sensiblement égal au diamètre d de l'organe 101. En revanche, l'étranglement 113, formé par un bourrelet périphérique de section sensiblement en demi-cercle formé dans la paroi 109 en saillie radiale vers l'intérieur du logement 114, présente un diamètre intérieur e sensiblement inférieur au diamètre d de l'organe 101. Le logement 114 présente successivement dans sa direction longitudinale, une partie d'entrée 111 dans laquelle l'organe 101 peut être engagé sans dilater la paroi 109, puis l'étranglement 113, puis un partie de fond de même diamètre que la partie d'entrée 111 et s'étendant jusqu'à la paroi 112.

Ainsi, pour monter l'organe 101 sur la paroi 104 à l'aide du support 106, on commence, comme visible à la figure 3, par amener le support 106 puis l'organe 101 sensiblement perpendiculairement à la paroi 104 à l'aplomb du trou 105, de manière que le support 106 et l'organe 101 soient coaxialement positionnés sur l'axe A du trou 105. Le montage s'effectue par un simple mouvement de translation du support 106 et de l'organe 101 le long de l'axe A vers la paroi 104. Le manchon du support 106 s'engage à travers le trou 105 jusqu'à sa position de butée et l'organe 101 s'engage dans la partie d'entrée 111 jusqu'à venir en contact avec l'étranglement 113.

Lorsque l'on continue à pousser l'organe 101 parallèlement à l'axe A vers l'intérieur du logement 114, comme indiqué par la flèche P à la figure 4, la surface de l'étranglement 113 fait came contre la surface 110 de l'organe 101 de manière que l'effort de poussée P sur l'organe 101 génère une force radiale F qui dilate vers l'extérieur la paroi 109 du manchon au niveau de l'étranglement 113 jusqu'à ce que le diamètre intérieur de l'étranglement 113 soit suffisant pour permettre le passage de l'organe 101. On pousse l'organe 101 jusqu'à ce que sa base 115 vienne en contact contre la paroi de fond 112 du logement 114, comme visible à la figure 5. L'organe 101 est alors entièrement contenu dans le logement 114, sa face supérieure étant sensiblement au niveau de l'extrémité longitudinale d'entrée du manchon. Bien sûr, en variante, l'objet ou organe peut n'avoir qu'une partie mâle engagée dans le logement 114 et présenter une partie saillante par rapport à la cloison 104.

Le support 106 étant en matière élastique, la dilatation de la paroi 109 provoque par réaction un force élastique qui serre la surface périphérique 110 de l'organe 101, comme indiqué par la flèche S à la figure 5, de manière à le retenir dans le logement 114. D'autre part, cette dilatation génère au niveau de l'étranglement 113 un renflement périphérique 117 qui fait saillie radialement à la surface extérieure de la paroi 109 et prés ente un diamètre extérieur E sensiblement supérieur au diamètre ℓ du trou 105. La face de butée 116 de la nervure annulaire 102 venant en contact sur la face 108 de la cloison 104, le renflement 117 vient en contact avec son autre face 121, pour prendre en sandwich la cloison 104. L'étranglement 113 est positionné longitudinalement à une distance c de la face de butée 116 de la nervure annulaire 102 sensiblement égale à l'épaisseur a de la paroi 104, de manière que la nervure annulaire 102 et le renflement 117 enserrent la cloison 104 et bloquent la translation du support 106 dans le trou 105. L'organe 101 se trouve alors retenu sur la cloison 104 par l'intermédiaire du support 106 monté dans le trou 105.

En variante, le diamètre extérieur D du manchon peut être légèrement inférieur au diamètre ℓ du trou 105 pour permettre la libre insertion du support 106 dans le trou 105 avec un jour radial limité. Toutefois dans ce cas, la distance c est de préférence inférieure à l'épaisseur a de la cloison 104 pour que le renflement 117 comble ledit jour radial de manière à bloquer le support 106 en position de retenue dans le trou 105.

Le montage du support 106 et de l'organe 101 peut donc être réalisé en une seule étape et un seul mouvement, ce qui le rend facile et rapide. En variante, il peut aussi être r éalisé en deux étapes successives, consistant à monter d'abord le support 106 dans le trou 105, puis l'organe 101 dans le support 106. Dans une autre variante, le diamètre intérieur b du logement 114 au niveau de la partie d'entrée 111 peut être légèrement inférieur au diamètre d de l'organe 101, de manière que l'organe 101 soit retenu par contact frottant dans ladite partie d'entrée 111 avant d'être poussé à travers l'étranglement 113. Cette caractéristique permet d'effectuer un préassemblage de l'organe 101 dans la partie d'entrée 111 du support 106 avant d'insérer le support 106 dans le trou 105, ce qui réduit le nombre de pièces détachées à manipuler au moment de cette dernière étape.

La paroi de fond 112 du support 106 est percée d'un trou 107 pour permettre le passage de fils de connexion de l'organe 101 (non représentés). Le trou 107 permet également de repousser l'organe 101 hors du logement 114 pour le démonter.

Dans une variante de l'invention non représentée, la paroi de fond 112 est située à l'autre extrémité du manchon, de manière à coïncider sensiblement avec la nervure annulaire 102 et le manchon est ouvert à son extrémité qui est introduite en premier dans le trou 105 lors du montage. Dans ce cas, l'organe 101 est amené par la face 121 de la cloison 104 opposée à la face 108 pour être poussé dans le logement 114 pendant que le support 106 est poussé en sens opposé dans le trou 105. Dans une autre variante de l'invention non représentée, la nervure annulaire 102 est remplacée par un deuxième étranglement du manchon analogue à l'étranglement 113 décrit ci-dessus et dans lequel s'engage l'organe 101 pour former un deuxième renflement. La cloison 104 est alors enserrée par les deux renflements dans la position dilatée de la paroi 109. Dans ce cas, le support 106 doit être bloqué en translation au moment de l'insertion l'organe 101.

Le support 106 est fabriqué par moulage de polymères à l'aide d'un moule conforme. Le support 106 présente une géométrie qui facilite sa fabrication par rapport à l'art an térieur. En effet, contrairement à la gorge 3, l'étranglement 113 n'offre pas de surface de prise perpendiculaire au mouvement axial de démoulage du manchon, de sorte qu'il se déforme élastiquement contre le moule de fabrieation (non représenté) lors du démoulage. Ainsi, le prix de revient du support est réduit grâce à l'augmentation des cadences de fabrication, l'abaissement du coût des machines -outil utilisées et la diminution de leur usure due à la réduction du nombre de mouvements.

Le support 106 représenté et décrit ci-dessus présente une structure adaptée pour retenir de manière démontable l'organe 101 dans le trou 105 de la cloison 104. Le bourrelet périphérique intérieur prévu dans une portion intermédiaire du manchon pour former l'étranglement 113 remplit en effet la double fonction de moyen de serrage de l'organe 101 afin de retenir ce dernier dans le support 106 et de moyen pour engendrer à la périphérie du support 106 un renflement périphérique extérieur apte à border le trou 105 de l'autre côté de la cloison 104 par rapport à la nervure 102, pour retenir le support, et donc l'objet qu'il contient, sur la cloison. L'organe 101, comme représenté, présente une surface extérieure lisse, sans rainure ni autre moyen destiné à se verrouiller avec l'étranglement 113 du support 106. En effet, la paroi de fond 112 empêche que l'organe 101 n'échappe de l'autre côté de la cloison à travers le support 106, notamment lors de son montage, et le serrage du bourrelet de la partie d'étranglement 113 est suffisant pour retenir de manière stable l'organe 101 dans le support. L'absence de verrouillage de l'organe 101 dans le support 106 facilite le démontage de l'organe 101 sans endommagement du support 106.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles -ci entrent dans le cadre de l'invention.

## Revendications

1. Support de retenue (106) destiné à retenir de manière démontable un objet (101) sur une cloison (104), ledit support (106) comportant un manchon apte à être longitudinalement engagé à travers un trou (105) formé dans ladite cloison (104), ledit manchon ayant une paroi (109) déformable de manière élastique dé finissant un espace intérieur, ledit manchon étant apte à recevoir dans son espace intérieur (114) une partie mâle dudit objet (101) à retenir, ledit manchon comportant une partie de butée (102,116) présentant une dimension transversale extérieure (L) supérieure à la dimension transversale extérieure correspondante (D) du reste dudit manchon, ladite partie de butée (102,116) étant destinée à venir en contact contre une face (108) de ladite cloison (104) autour dudit trou (105) lorsque ledit manchon est engagé dans ledit trou (105), ledit manchon présentant, entre une partie d'entrée et une partie de fond, une partie d'étranglement (113) formée par un bourrelet périphérique en saillie radiale sur l'intérieur de la paroi du manchon et dans laquelle une dimension transversale (e) dudit espace intérieur (114) est destinée à être inférieure à une dimension transversale correspondante (d) de ladite partie mâle de l'objet (101), ladite partie d'étranglement (113) étant apte à serrer transversalement de manière élast ique la partie mâle dudit objet (101) engagée dans ladite partie d'étranglement (113) pour la retenir dans ledit espace intérieur (114) ; **caractérisé par le fait que** la paroi (109) dudit manchon au niveau de la partie d'étranglement (113) est apte à être déformée de manière élastique par la partie mâle dudit objet (101) dans une position de retenue dans laquelle ladite paroi (109) du manchon est repoussée transversalement vers l'extérieur par la partie mâle dudit objet (101) engagée dans ladite partie d'étranglement (113), ledit bourrelet périphérique étant apte, après l'engagement de la partie mâle de l'objet (101) dans la partie d'étranglement, à déformer la paroi du manchon au niveau de la partie d'étranglement de manière à générer un renflement périphéri que (117) qui fait saillie vers l'extérieur pour entrer en contact avec l'autre face (121) de ladite cloison (104) et enserrer ladite cloison entre lui -même et la partie de butée, afin de retenir longitudinalement ledit support (106) dans ledit trou (105).

2. Support selon la revendication 1, destiné à être engagé dans un trou débouchant (105) de ladite cloison (104), **caractérisé par le fait que** sa longueur est supérieure à l'épaisseur (a) de ladite cloison (104), la distance longitudinale (c) entre la partie de butée (116) et la partie d'étranglement (113) dudit manchon étant sensiblement égale à ladite épaisseur (a), ladite partie de butée (102,116) et ladite partie d'étranglement (113) du manchon étant destinées à enserrer ladite cloison (104) lorsque ladite paroi (109) est en position de retenue.

3. Support selon l'une des revendications 1 ou 2, **caractérisé par le fait que** ladite partie de butée (102,116) est prévue sensiblement à une extrémité longitudinale dudit manchon.

4. Support selon l'une des revendications 1 à 3, **caractérisé par le fait que** ladite partie de butée comporte une nervure annulaire (102) formée en saillie sur la périphérie extérieure de la paroi (109) dudit manchon.

5. Support selon l'une des revendications 1 à 3, **caractérisé par le fait que** ladite partie de butée est constituée par la paroi (109) d'une deuxième partie d'étranglement dudit manchon en saillie vers l'intérieur dudit espace (114) et apte à être déformée pour faire saillie vers l'extérieur en position de retenue lors de l'engagement dudit objet (101).

6. Support selon l'une des revendications 1 à 5, **caractérisé par le fait que** la partie de fond du manchon s'étend jusqu'à une paroi de fond (112) fermant ledit espace intérieur à une extrémité.

7. Support selon la revendication 6, destiné à reten ir un organe électrique (101) d'un véhicule automobile sur une cloison (104) dudit véhicule, **caractérisé par le fait que** ladite paroi de fond (112) est percée d'un orifice (107) pour permettre le passage de fils électriques reliés audit organe électrique (101).

8. Support selon l'une des revendications 1 à 7, **caractérisé par le fait que** ledit manchon est sensiblement cylindrique, de préférence de section circulaire ou polygonale.

9. Support selon l'une des revendications 1 à 8, **caractérisé par le fait qu'**il est réalisé d'un seul tenant en matière élastique, de préférence en polymère.

10. Ensemble formé d'un support de retenue (106) et d'un objet (101) destiné à être retenu à l'aide dudit support dans un trou (105) formé dans une cloison (104), **caractérisé par le fait que** ledit support est un support selon la revendication 6, l'espace intérieur (114) du support étant apte à contenir entièrement ledit objet lorsque celui-ci est engagé dans ledit espace intérieur (114) jusqu'à venir en contact contre la paroi de fond (112), ledit objet ayant une dimension transversale (d) supérieure à une dimension transversale correspondante (e) de l'espace intérieur du manchon dans la partie d'étranglement (113), de sorte que l'objet (101) engagé dans ledit espace intérieur jusqu'à la paroi de fond dilate la paroi (109) du manchon au niveau de la partie d'étranglement de manière à générer ledit renflement périphérique (117).
